# NEUE EUROPÄISCHE PATENTSCHRIFT

(11) **EP 0 400 476 B2**
(45) Veröffentlichungstag und Bekanntmachung des Hinweises auf die Entscheidung über den Einspruch: **12.08.1998**
(45) Hinweis auf die Patenterteilung: 31.03.1993
(21) Anmeldenummer: 90109821.0
(22) Anmeldetag: 23.05.1990
(51) Int. Cl.: B23K 26/04, B23K 26/08

(54) **Laserbearbeitungsverfahren**
Laser machining method
Procédé pour l'usinage à laser

(30) Priorität: 29.05.1989 DE 8906578 U
(43) Veröffentlichungstag der Anmeldung: 05.12.1990
(73) Patentinhaber: Rofin Sinar Laser GmbH, 22113 Hamburg (DE)
(72) Erfinder: Gerhäusser, Wilfried, Dr., D-8502 Zirndorf (DE); Kugler, Peter, D-8510 Fürth (DE)
(74) Vertreter: Tergau, Dietrich, Dipl.-Ing.

(56) Entgegenhaltungen:
- EP-A- 0 215 389
- DD-A- 243 798
- GB-A- 1 360 380
- GB-A- 1 467 152
- GB-A- 2 126 955
- US-A- 4 049 945
- US-A- 4 063 064
- US-A- 4 099 830
- US-A- 4 160 894
- US-A- 4 297 559

## Beschreibung

Die Erfindung betrifft ein Verfahren zum Bearbeiten von Werkstücken mit einer Laserbearbeitungsvorrichtung, insbesondere zur Beschriftung von Werkstücken, gemäß dem Oberbegriff des Patentanspruchs 1.

Es ist bekannt, einer Laserbearbeitungsvorrichtung Werkstücke diskontinuierlich zuzuführen, z.B. manuell, mit Hilfe eines Handhabungsautomaten oder mittels eines schubweise betriebenen Transportbandes. Dabei wird das jeweilige Werkstück in der Bearbeitungsebene feststehend bevorzugt so positioniert, daß es möglichst zentral in dem zur Verfügung stehenden Bildfeld der Bearbeitungsvorrichtung zu liegen kommt. Innerhalb dieses Bildfeldes ist der Laserstrahl zur Durchführung der jeweiligen Bearbeitung frei führbar. Die Größe des Bildfeldes kann durch den Abstand der Bearbeitungsvorrichtung von der Bearbeitungsebene bzw. durch die Fokussieroptik am Ausgang des Lasergenerators eingestellt werden. Zur Erzeugung eines energiereichen und scharf gebündelten Laserstrahls ist es vorteilhaft, das Bildfeld möglichst klein zu wählen. Zum anderen ist es aber bei großen Werkstücken, bzw. bei ausgedehnten Bearbeitungsbereichen auf einer Werkstückoberfläche notwendig, daß das Bildfeld eine Mindestausdehnung aufweist, so daß der Laserstrahl an alle gewünschten Bearbeitungsstellen geführt werden kann. Falls ein derartiger Kompromiß zwischen der Güte des Laserstrahls und der notwendigen Größe des Bildfeldes nicht möglich ist, muß unter Umständen ein Bearbeitungsvorgang in Teilabschnitten ausgeführt und das Werkstück dazwischen neu positioniert werden.

Eine derartige diskontinuierliche Werkstuckzuführung, wie sie beispielsweise aus der EP-A-0 215 389 bekannt ist, hat aber den Nachteil, daß aufgrund der dabei ständig auftretenden positiven und/oder negativen Beschleunigungen der unter Umständen großen Massen einzelner Werkstücke erhebliche Totzeiten auftreten. Hierdurch wird der maximal mögliche Werkstückdurchsatz durch die Laserbearbeitungsvorrichtung unter Umständen erheblich begrenzt.

Der Erfindung liegt die Aufgabe zugrunde, Verfahren zum Bearbeiten von Werkstücken mit einer Laserbearbeitungsvorrichtung anzugeben, der die Werkstücke kontinuierlich mit möglichst konstanter Bewegungsgeschwindigkeit in der Bearbeitungsebene zugeführt werden.

Die Aufgabe wird gelöst mit den Merkmalen des Patentanspruches 1.

Die Erfindung und mit ihr erzielbare Vorteile werden anhand der nachfolgend kurz angeführten Figuren näher erläutert. Dabei zeigt:
- FIG 1: ein Ausführungsbeispiel einer Laserbearbeitungsvorrichtung mit feststehender Fokussieroptik,
- FIG 2: eine weitere Ausführungsform mit zusätzlicher Feinkorrekturvon kurzzeitigen Schwankungen in der Werkstückbewegungsgeschwindigkeit, und
- FIG 3: eine weitere Ausführungsform, bei der ein Teil der Bearbeitungsvorrichtung parallel zur Bewegungsrichtung der zu bearbeitenden Werkstücke mitgeführt werden kann.

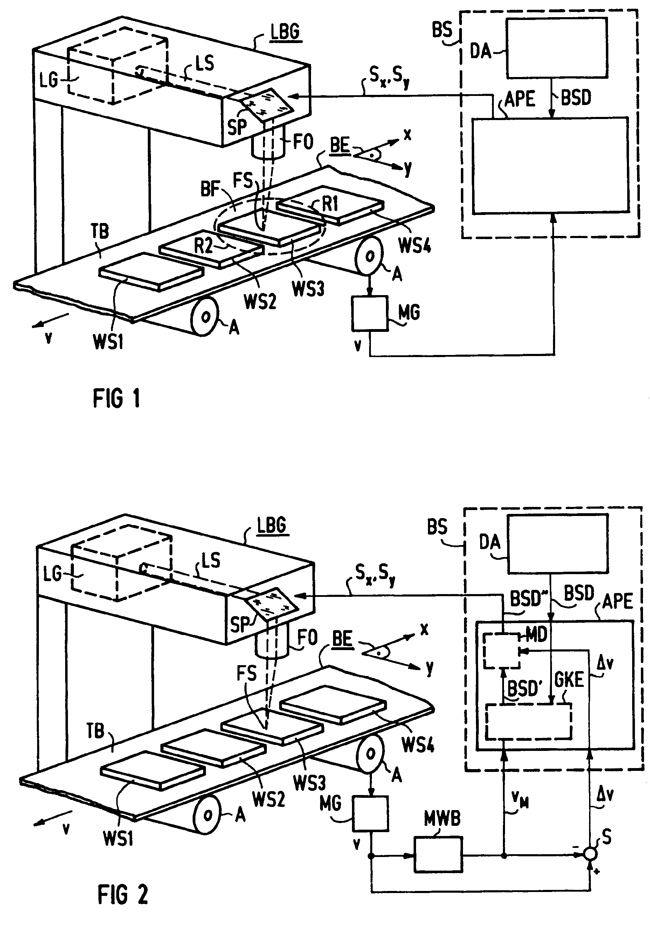

Gemäß FIG 1 enthält zur Verwendung beim erfindungsgemäßen Verfahren vorgesehene Laserbearbeitungsvorrichtung LBG einen Generator LG zur Erzeugung des Laserstrahles LS. Ferner sind Mittel zur Führung des Strahles auf der Bearbeitungsebene BE enthalten. In der FIG 1 sind diese beispielhaft in Form mindestenseines ansteuerbaren Spiegels SP dargestellt. Dieser lenkt zum einen den vom Generator LG erzeugten Laserstrahl LS durch die Fokussieroptik FO hindurch auf die Bearbeitungsebene BE um. Zum anderen wird hierdurch die Führung insbesondere des Fokuspunktes FS des Laserstrahles innerhalb des maximal zur Verfügung stehenden Bildfeldes BF auf der Bearbeitungsebene BE ermöglicht. Hierzu werden dem Strahlführungsmittel Positioniersignale Sₓ, S_{y} zugeführt, welche von einer Bearbeitungssteuerung BS aus den zur jeweils gewünschten Bearbeitung bzw. Beschriftung gehörigen Daten BSD zur Laserstrahlführung gebildet werden. Gemäß FIG 1 enthält die Bearbeitungssteuerung BS bevorzugt eine Datenaufbereitung DA zur Bildung der Strahlführungsdaten BSD aus Eingabegrößen, und eine Anpassungseinheit APE zur Ausgabe der Daten an die Strahlführungsmittel, d.h. insbesondere mindestens an den Spiegel SP.

Die zu bearbeitenden Werkstücke werden entlang der Bearbeitungsebene kontinuierlich geführt. Hierzu dient in FIG 1 beispielhaft ein Transportband TB. Hiermit werden mit nahezu konstanter Bewegungsgeschwindigkeit v beispielhaft die Werkstücke WS1...WS4 in (-x)-Richtung in der Bearbeitungsebene BE geführt. In FIG 1 befindet sich das Werkstück WS3 gerade nahezu im Zentrum des Bildfeldes BF unterhalb der Fokussieroptik FO. Zum Ausgleich dieser kontinuierlichen Werkstückbewegung werden die Strahlführungsdaten BSD neuerungsgemäß an die Bewegungsgeschwindigkeit v der Werkstücke in der Bearbeitungsebene angepaßt, und danach bevorzugt in Form der Positioniersignale Sₓ, S_{y} an die Strahlführungsmittel ausgegeben. Die Anpassung erfolgt bevorzugt durch die Anpassungseinheit APE innerhalb der Bearbeitungssteuerung BS. Hierzu wird der Istwert der Bewegungsgeschwindigkeit v der Werkstücke bevorzugt über einen Meßgeber MG erfaßt und der Anpassungseinheit APE zugeführt.

Aufgrund der Eigenbewegung des jeweils zu bearbeitenden Werkstückes muß bei der Führung des Laserstrahles auf der Bearbeitungsebene nicht mehr das gesamte zur Verfügung stehende Bildfeld BF ausgenutzt werden. Wird die Bewegungsgeschwindigkeit v der Werkstücke durch entsprechende Anpassung der Strahlführungsdaten nahezu vollständig kompensiert, so muß der Strahl kaum mehr an die Ränder des Bildfeldes BF geführt werden, an denen ein Werkstück in das Bildfeld eintritt bzw. dieses wieder verläßt. Werden gemäß FIG 1 die Werkstücke beispielhaft in (-x)-Koordinatenrichtung in der Bearbeitungsebene BE geführt, so treten die Werkstücke im Randbereich R1 in das Bildfeld BF ein und im Randbereich R2 aus diesem wieder aus. Der Fokuspunkt FS wird somit nur noch in (±y)-Koordinatenrichtung unter Umständen bis zur Bildfeldgrenze geführt, während er sich in (±x)-Richtung zunehmend im Zentrum des Bildfeldes BF aufhält und nicht mehr in die Randbereiche R1, R2 geführt wird. Dieser Umstand kann gemäß weiteren Ausführungsformen der Erfindung weiter genutzt werden.

Werden in einer anderen Ausführungsform die aufgrund der Bildfeldeinengung in (±x)-Richtung zunehmend nicht ausgenutzten Randbereiche R1, R2 des Bildfeldes BF durch entsprechende Vorgabe der Strahlführungsdaten BSD dennoch ausgenutzt, so hat dies in FIG 1 in (±x)-Richtung eine Erhöhung des nutzbaren Bearbeitungsfeldes in der Bearbeitungsebene BE zur Folge. Es können somit größere Werkstückbereiche in einem Arbeitsgang bearbeitet werden.

Gemäß der Erfindung wird mit dem Bearbeitungsvorgang eines der in der Bearbeitungsebene kontinuierlich entlang geführten Werkstücke näherungsweise in dem Randbereich des Bildfeldes BF begonnen, an dem das Werkstück in das Bildfeld eintritt. In FIG 1 ist dies der Randbereich R1. Erfindungsgemäß kann nun die Bewegungsgeschwindigkeit v der Werkstücke so auf die für einen Bearbeitungsvorgang notwendige mittlere Zeitdauer abgestimmt werden, daß die Bearbeitung gerade dann abgeschlossen ist, wenn das bearbeitete Werkstück bzw. der Werkstückbereich aus dem Bildfeld BF am entsprechenden Randbereich austritt. In FIG 1 ist dies beispielsweise der Randbereich R2. Hierdurch ist es möglich, die Bewegungsgeschwindigkeit v der Werkstücke und damit den Gesamtdurchsatz der Laserbearbeitungsvorrichtung weiter zu erhöhen. Während eines Bearbeitungsvorganges wird somit die überhöhte Bewegungsgeschwindigkeit v nicht mehr durch die Vortriebsbewegung des Fokussierpunktes FS in Bearbeitungsrichtung ausgeglichen. Der Fokuspunkt wandert somit während des Bearbeitungsvorganges allmählich von dem einen Bildfeldrandbereich, in dem der Bearbeitungsvorgang begonnen wurde, bis hin zum gegenüberliegenden Bildfeldrandbereich, in dem der Bearbeitungsvorgang beendet wird.

So treten in FIG 1 die Werkstücke WS1...WS4 im Randbereich R1 in das Bildfeld BF ein. Der Fokuspunkt FS wird nun so positioniert, daß mit Eintritt eines Werkstückes in das Bildfeld dessen Bearbeitung in diesem Randbereich begonnen wird. Da die Geschwindigkeit v der Werkstücke in (-x)-Richtung größer ist als die maximal mögliche Bearbeitungsgeschwindigkeit in (+x)-Richtung, wird der Fokuspunkt während der Bearbeitung allmählich bis zum gegenüberliegenden Randbereich R2 "mitgenommen". Gemäß der Neuerung sind die Bewegungsgeschwindigkeit v und die mittlere Dauer eines Bearbeitungsvorganges so aufeinander abgestimmt, daß der Bearbeitungsvorgang mit Erreichen dieses Randbereiches R2 abgeschlossen ist. Die Totzeit bis zum Beginn des nächsten Bearbeitungsvorganges, welche besonders vorteilhaft z.B. durch den Abstand der Werkstücke WS1...WS4 auf dem Transportband TB eingestellt werden kann, wird genutzt zur Neupositionierung des Laserstrahles auf den wiederum im Randbereich R1 liegenden Startpunkt für den folgenden Bearbeitungsvorgang.

Gemäß einer weiteren Ausführungsform der Erfindung sind Bewegungsmittel vorhanden, welche eine Bewegung zumindest eines Teiles der Laserbearbeitungsvorrichtung während eines Bearbeitungsvorganges in Richtung der Bewegung der Werkstücke ermöglichen.

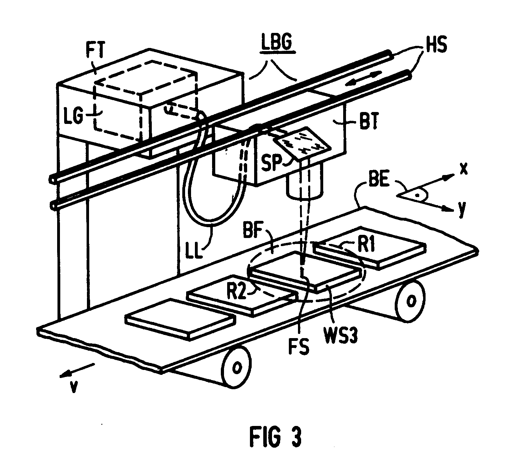

In FIG 3 ist eine derartige Ausführungsform beispielhaft dargestellt. Dabei enthält die Laserbearbeitungsvorrichtung LBG einen feststehenden Teil FT, welcher beispielsweise den Generator LG zur Erzeugung des Laserstrahles LS beinhaltet. Desweiteren ist ein beweglicher Teil BT vorhanden, welcher die Mittel zur Strahlführung enthält, insbesondere den mindestens einen Spiegel SP. Der bewegliche Teil BT ist bevorzugt mittels Hängeschienen HS parallel zur (±x)-Bewegungsrichtung der Werkstücke verschiebbar. Zur Übertragung des Laserstrahles zwischen dem feststehenden und den beweglichen Teil dient bevorzugt ein optischer Lichtleiter LL. Erfindungsgemäß gibt die Bearbeitungsvorrichtung die Strahlführungsdaten angepaßt an die Relativgeschwindigkeit zwischen den Werkstücken in der Bearbeitungsebene und den Strahlführungsmittel im beweglichen Teil BT vor.

Mit dieser Vorrichtung ist es möglich, die Bewegungsgeschwindigkeit v der Werkstücke in der Bearbeitungsebene weiter zu erhöhen, und/oder in Richtung der Bewegung der Werkstücke das nutzbare Bearbeitungsfeld zu vergrößern. Hierzu wird erfindungsgemäß der bewegliche Teil BT der Laserbearbeitungsvorrichtung für die Dauer eines Bearbeitungsvorganges mit geringerer Geschwindigkeit in Richtung der Werkstückbewegung nachgeführt. Auch hier werden die Totzeiten zwischen einzelnen Bearbeitungsvorgängen benutzt, um den beweglichen Teil BT der Bearbeitungsvorrichtung in die Ausgangsposition zurückzuführen. Besonders vorteilhaft wird während eines Bearbeitungsvorganges sowohl der bewegliche Teil der Bearbeitungsvorrichtung als auch der Fokuspunkt FS in der bereits anhand von FIG 1 näher beschriebenen Weise von einem Randbereich bis zum gegenüberliegenden Randbereich des Bildfeldes BF mitgenommen.

In FIG 2 ist eine weitere vorteilhafte Ausführungsform der Erfindung dargestellt. Mit deren Hilfe ist es möglich, kurzzeitige Schwankungen im Istwert der Bewegungsgeschwindigkeit v der Werkstücke so auszugleichen, daß nahezu keine Abweichungen des Fokuspunktes FS des Laserstrahles LS von dem durch die Strahlführungsdaten BSD vorgegebenen, idealen Verlauf auftreten. Hierzu wird über einen Geber MWB der Mittelwert v_{M} der Bewegungsgeschwindigkeit v der Werkstücke in der Bearbeitungsebene BE bestimmt. Mittels einer Grundkorrektureinheit GKE werden die bevorzugt von einer Datenaufbereitung DA aus Vorgabewerten gebildeten Strahlführungsdaten BSD an den Mittelwert v_{M} angepaßt. Die derart korrigierten Strahlführungsdaten BSD' werden desweiteren einem Modulator MD zugeführt, welcher diese wiederum an die Abweichung Δv des Istwertes v des Bewegungsgeschwindigkeit der Werkstücke vom dazugehörigen Mittelwert v_{M} anpaßt. Die derart korrigierten Strahlführungsdaten BSD'' werden schließlich bevorzugt in Form von Positioniersignalen Sₓ, S_{y} an die Strahlführungsmittel in der Laserbearbeitungsvorrichtung ausgegeben. Mit dieser Ausführungsform ist eine schnelle Feinanpassung der Strahlführungsdaten an kurzzeitige Schwankungen des Istwertes der Bewegungsgeschwindigkeit der Werkstücke möglich.

## Patentansprüche

1. Verfahren zum Bearbeiten von Werkstücken (WS1, WS2, WS3, ...) mit einer Laserbearbeitungsvorrichtung, mit Mitteln zum kontinuierlichen Transport der Werkstücke entlang der Bearbeitungsebene (BE), insbesondere einem Transportband (TB), sowie einem Laserkopf (LBG), enthaltend einen Generator (LG) zur Erzeugung eines Laserstrahles (LS) auf der Bearbeitungsebene (BE) und Mittel zur freien Führung des Strahles (LS) auf der Bearbeitungsebene (BE), insbesondere mindestens einen Spiegel (SP), und einer Bearbeitungssteuerung (BS), welche die Strahlführungsmittel, angepaßt an die Bewegungsgeschwindigkeit (v) der Werkstücktransportmittel beeinflußt, **dadurch gekennzeichnet**, daß die Strahlführungsmittel den Laserstrahl (LS) zu Beginn eines Bearbeitungsvorganges näherungsweise in den Randbereich (R1) des maximal zur Führung des Laserstrahles (LS) in der Bearbeitungsebene (BE) zur Verfügung stehenden Bildfeldes (BF) positionieren, an dem ein Werkstück (WS1,WS2,WS3,...) von den Transportmitteln in das Bildfeld eingeführt wird, und daß die Bewegungsgeschwindigkeit der Werkstücktransportmittel so auf die mittlere Dauer des Bearbeitungsvorganges abgestimmt vorgegeben wird, daß die Bearbeitung näherungsweise in dem Randbereich (R2) des Bildfeldes (BF) abgeschlossen ist, an dem das Werkstück von den Transportmitteln wieder aus dem Bildfeld herausgeführt wird.

## Claims

1. Method for machining work pieces (WS1, WS2, WS3, ...) with a laser-machining device having means for continuous transportation of the work pieces along the machining plane (BE), in particular a conveyor belt (TB), the device also having a laser head (LBG) containing a generator (LG) for the generation of a laser beam (LS) on the machining plane (BE) and means for freely guiding the beam (LS) on the machining plane (BE), comprising in particular at least one reflector (SP) and a machining control (BS) which influences the beam-guiding means according to the speed of movement (v) of the work piece-transportation means, characterised in that the beam-guiding means position the laser beam (LS), at the start of a machining operation, bringing it substantially into the edge region (R1) of the maximum image field (BF) available for guiding the laser beam (LS) in the machining plane (BE), at which edge region a work piece (WS1, WS2, WS3,...) is introduced into the image field by the transportation means, and in that the speed of movement of the work piece-transportation means is preset, in accordance with the average duration of the machining operation, in such a way that the machining is substantially terminated in the edge region (R2) of the image field (BF) at which edge region the work piece is guided out of the image field again by the transportation means.

## Revendications

1. Procédé pour traiter des pièces à usiner (WS1,WS2,WS3,...) avec un dispositif pour le traitement au laser comportant des moyens pour le transport continu de pièces à usiner le long du plan de traitement (BE), notamment un tapis roulant (TB), ainsi qu'une tête laser (LBG) qui comporte un générateur (LG) pour générer un rayon laser (LS) sur le plan de traitement (BE), et des moyens pour le guidage libre du rayon (LS) sur le plan de traitement (BM), notamment un miroir (SP), et une commande de traitement (BS), qui influence les moyens de guidage du rayon de façon adaptée à la vitesse de déplacement (V) des moyens de transport des pièces à usiner, caractérisé en ce que les moyens de guidage du rayon positionnent le rayon laser (LS), au début d'un processus de traitement, et par approximation, dans la zone marginale (R1) du champ d'image (BF) au maximum disponible pour le guidage du rayon laser (LS), dans le plan de traitement (BE), et auquel est introduit, dans le champ d'image, une pièce à usiner (WS1,WS2,WS3),...) par les moyens de transport, et en ce que la vitesse de déplacement des moyens de transport de la pièce à usiner est adaptée et déterminée à l'avance de telle manière sur la durée moyenne du processus de traitement que le traitement est par approximation terminé dans la zone de bordure (R2) du champ d'image (BF), dans laquelle la pièce à usiner est à nouveau évacuée du champ d'image par les moyens de transport.
